# EUROPEAN PATENT APPLICATION

(11) **EP 4 838 261 A1**
(43) Date of publication of application: **11.11.2026**
(21) Application number: 24828722.9
(22) Date of filing: 27.08.2024
(51) Int. Cl.: G01S 13/90

(54) **LEARNING MODEL, SIGNAL PROCESSING DEVICE, FLYING BODY, AND TEACHER DATA GENERATION METHOD**

(30) Priority: 05.01.2024 JP 2024000572
(71) Applicant: Space Shift, Inc., Tokyo 100-0004 (JP)
(72) Inventor: KANEMOTO Naruo, Tokyo 100-0004 (JP); KAWAKAMI Yuji, Tokyo 100-0004 (JP); YASUI Shusuke, Tokyo 100-0004 (JP); YOKOYA Hiroshi, Tokyo 100-0004 (JP); OGUSHI Fumitaka, Tokyo 100-0004 (JP)
(74) Representative: Hoffmann Eitle
(86) International application number: PCT/JP2024/030452
(87) International publication number: WO 2025/146736

(57) **Abstract**

The present invention is to enable the detection of a target object such as a ground object using RAW data. A learning model is trained using training data with, as input, a received signal of a first synthetic aperture radar based on reflected electromagnetic waves obtained by reflecting electromagnetic waves radiated to a learning area, and first target object information on a target object in the learning area according to a feature of the received signal of the first synthetic aperture radar as output to cause a computer to perform a function to output second target object information on a target object in a detection area according to a feature of a received signal of a second synthetic aperture radar in response to input of the received signal of the second synthetic aperture radar based on reflected electromagnetic waves obtained by reflecting electromagnetic waves radiated to the detection area.

## Description

### Technical Field

The present invention relates to a learning model, a signal processing device, a flying object, and a program.

### Background Art

Observation of the state of the earth surface including the ground and sea surfaces is widely carried out using flying objects such as artificial satellites, aircrafts, and drone devices. In observation methods by artificial satellites, there are an observation method of making an observation by acquiring radar images, so-called SAR images, obtained by using a synthetic aperture radar (SAR) technique, an observation method of making an observation by acquiring optical images and SAR images, and combining both images, and the like. In Patent Literature 1, it is disclosed that an object is detected using raw data (RAW data) obtained by a synthetic aperture radar without going through a SAR imaging process.

### Citation List

### Patent Literature

Patent Literature 1: Japanese Patent Application Laid-Open No. 2023-000897

### Summary of Invention

### Technical Problem

Various methods of how to detect a target object such as a ground object using RAW data are considered. Therefore, it is an object of the present invention to provide a learning model, a signal processing device, a flying object, and a training data generation method capable of detecting a target object such as a ground object using RAW data.

### Solution to Problem

A learning model according to one aspect of the present invention causes a computer to perform: a function to make the learning model trained using training data with, as input, a feature of a received signal of a first synthetic aperture radar based on reflected electromagnetic waves obtained by reflecting electromagnetic waves radiated to a learning area, and first target object information on a target object in the learning area as output; and a function to output second target object information on a target object in a detection area in response to input of a feature of a received signal of a second synthetic aperture radar based on reflected electromagnetic waves obtained by reflecting electromagnetic waves radiated to the detection area.

According to this aspect, since the target object information can be output based on the feature of the received signal of the synthetic aperture radar, the target object such as a ground object can be detected using RAW data.

In the above aspect, the feature of the received signal of the first synthetic aperture radar may include a frequency spectrum of the received signal of the first synthetic aperture radar, and the feature of the received signal of the second synthetic aperture radar may include a frequency spectrum of the received signal of the second synthetic aperture radar.

In the above aspect, the feature of the received signal of the first synthetic aperture radar may include a signal strength of the received signal of the first synthetic aperture radar, and the feature of the received signal of the second synthetic aperture radar may include a signal strength of the received signal of the second synthetic aperture radar.

In the above aspect, the feature of the received signal of the first synthetic aperture radar may include a phase of the received signal of the first synthetic aperture radar, and the feature of the received signal of the second synthetic aperture radar may include a phase of the received signal of the second synthetic aperture radar.

According to these aspects, since the target object information can be output based on the frequency spectrum, the signal strength, or the phase as the feature of the received signal of the synthetic aperture radar, the target object such as a ground object can be detected using RAW data.

In the above aspect, the received signal of the first synthetic aperture radar may be a signal corresponding to a partial area in which the feature meets a predetermined condition in the learning area, and the feature of the received signal of the first synthetic aperture radar may include a feature based on the target object in the learning area.

According to this aspect, since the received signal that becomes the source of the feature of the received signal as training data of the learning model is the signal corresponding to the area in which the feature meets the predetermined condition, the amount of data required for training is reduced. Further, since the feature of the received signal includes the feature based on the target object in the learning area, the target object such as a ground object can be detected using RAW data while reducing the amount of data.

In the above aspect, the received signal of the second synthetic aperture radar may be a signal corresponding to a partial area in which the feature meets the predetermined condition in the detection area, and the feature of the received signal of the second synthetic aperture radar may include a feature based on the target object in the detection area.

In this aspect, since the feature of the received signal of the second synthetic aperture radar used for inference using the learning model can also be that based on the signal corresponding to the partial area in which the feature meets the predetermined condition, the amount of data required for inference is reduced. Further, since the feature of the received signal of the second synthetic aperture radar includes the feature based on the target object in the learning area, the target object such as a ground object can be detected using RAW data while reducing the amount of data.

In the above aspect, the first target object information may include information indicative of an attribute of the target object in the learning area, and the second target object information may include information indicative of an attribute of the target object in the detection area.

In this aspect, since the information indicative of the attribute of the target object can be obtained, the target object can be detected while getting more detailed information on the target object.

An information processing device according to another aspect of the present invention includes: a storage unit in which the learning model is stored; a signal acquisition unit that acquires the received signal of the second synthetic aperture radar; and an estimation unit that inputs, to the learning model, the received signal of the second synthetic aperture radar to infer the second target object information.

A flying object according to still another aspect of the present invention includes: a storage unit in which the learning model is stored; a signal acquisition unit that acquires the received signal of the second synthetic aperture radar; an estimation unit that inputs, to the learning mode, the received signal of the second synthetic aperture radar to infer the second target object information; and a signal output unit that outputs, to the outside, an output signal based on the second target object information.

A training data generation method according to yet another aspect of the present invention is a training data generation method causing a computer to perform the following steps of: acquiring a received signal of a first synthetic aperture radar based on reflected electromagnetic waves obtained by reflecting electromagnetic waves radiated to a learning area; extracting, from the received signal of the first synthetic aperture radar in the learning area, a feature of a training signal corresponding to an area in which a target object in the learning area exists; acquiring target object information on the target object; and storing, as training data used for training of a learning model to make the computer work, a pair of a feature of the training signal and the target object information to output second target object information on a target object in a detection area according to a feature of a received signal of a second synthetic aperture radar in response to input of the feature of the received signal of the second synthetic aperture radar based on reflected electromagnetic waves obtained by reflecting electromagnetic waves radiated to the detection area.

### Advantageous Effect of Invention

According to the present invention, a target object such as a ground object can be detected using RAW data.

### Brief Description of Drawings

[Figure 1] Figure 1 is a block diagram of an observation system according to the present embodiment.
[Figure 2] Figure 2 is a diagram for describing a learning model according to the present embodiment.
[Figure 3] Figure 3 is a diagram for describing training of the learning model according to the present embodiment.
[Figure 4] Figure 4 is a flowchart for describing an example of processing in a flying object according to the present embodiment.
[Figure 5] Figure 5 is a diagram for describing an example of inference using the learning model according to the present embodiment.
[Figure 6] Figure 6 is a flowchart for describing another example of processing in the flying object according to the present embodiment.
[Figure 7] Figure 7 is a diagram for describing another example of inference using the learning model according to the present embodiment.
[Figure 8] Figure 8 is a flowchart for describing still another example of processing in the flying object according to the present embodiment.
[Figure 9] Figure 9 is a diagram for describing another example of the learning model according to the present embodiment.
[Figure 10] Figure 10 is a diagram for describing an example of a training data generation method used for training of the learning model according to the present embodiment.
[Figure 11] Figure 11 is a flowchart for describing yet another example of processing in the flying object according to the present embodiment.
[Figure 12] Figure 12 is a diagram for describing still another example of inference using the learning model according to the present embodiment.
[Figure 13] Figure 13 is a block diagram illustrating another aspect of an observation system.

### Description of Embodiment

A preferred embodiment of the present invention will be described with reference to the accompanying drawings. In respective drawings, those with the same reference numerals have the same or similar components.

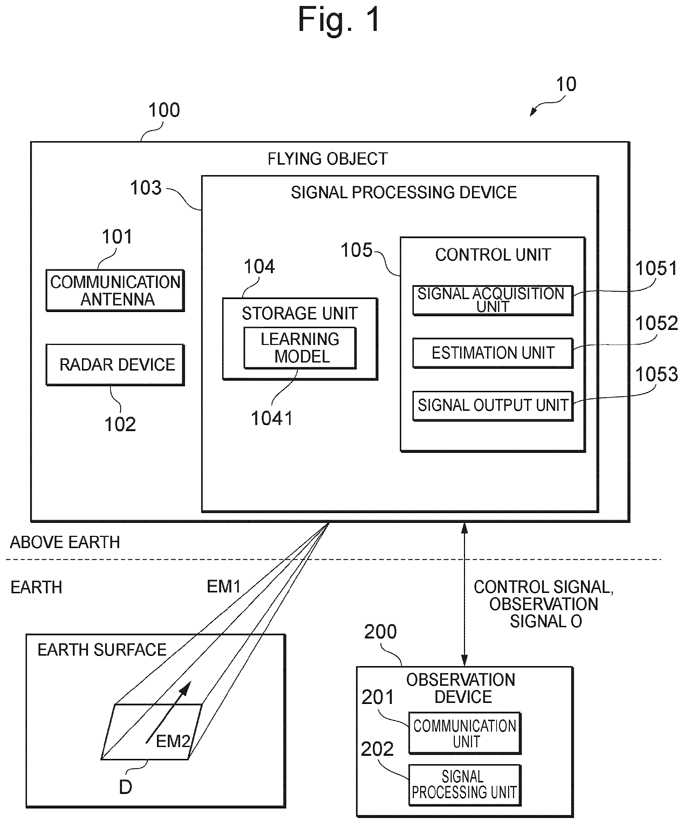

In Figure 1, a block diagram of an observation system 10 according to the present embodiment is illustrated. The observation system 10 includes a flying object 100 and an observation device 200. The flying object 100 is placed in a space above the earth, and the observation device 200 is placed on the earth. In the present embodiment, the flying object 100 observes a detection area D on the surface of the earth by radar, and an observation signal O processed in the flying object 100 is transmitted to the observation device 200. The observation signal O is, for example, a received signal acquired by the flying object 100 or corresponds to the received signal as will be described later, which is a signal indicative of target object information as information on a target object such as a ground object, a ship on the sea, or the like in the detection area D.

The flying object 100 includes a communication antenna 101, a radar device 102, and a signal processing device 103. The flying object 100 is an artificial satellite capable of acquiring and processing received signals, which is placed in outer space and orbits around the earth. Note that the flying object 100 may also be a geostationary satellite. Further, the flying object 100 has only to be a device capable of being placed above the earth such as an aircraft, a helicopter, or a drone device.

The communication antenna 101 is an antenna for the flying object 100 to communicate with external devices provided on the earth or in outer space.

The radar device 102 is a device that radiates electromagnetic waves EM1 such as microwaves to the detection area D on the earth surface, and acquires reflected electromagnetic waves EM2 that are the electromagnetic waves EM1 reflected by a target object to be observed in the detection area D. The radar device 102 is, for example, a synthetic aperture radar (SAR). The reflected electromagnetic waves EM2 are processed and recorded by the radar device 102 as a received signal (RAW data) based on fluctuations in electromagnetic waves and capable of being handled in the flying object 100. The received signal is recorded, for example, as a complex signal corresponding to respective coordinates in the detection area D. The radar device 102 transmits the observation signal O to the observation device 200 through the communication antenna 101.

In the radar device 102, a processor for controlling the process of acquiring a received signal and a storage device in which a program necessary for the control is stored.

The signal processing device 103 is an information processing device that processes the received signal acquired by the radar device 102. The signal processing device 103 is a computer having a storage area such as a memory to perform predetermined processing by a processor executing a program stored in the storage area.

The signal processing device 103 has a storage unit 104 and a control unit 105. The storage unit 104 is, for example, a semiconductor memory such as a RAM, or an optical disk. The storage unit 104 stores various information used for processing in the signal processing device 103.

In the storage unit 104, a learning model 1041 is stored. The learning model 1041 is a program trained to take a received signal as input and to output target object information according to the feature of the received signal. The feature in the present embodiment and the details of the learning model 1041 will be described later.

The control unit 105 performs signal processing in the signal processing device 103. Further, the control unit 105 controls the transmission of the processing result of the received signal through the flying object 100. The control unit 105 has a signal acquisition unit 1051, an estimation unit 1052, and a signal output unit 1053.

The signal acquisition unit 1051 acquires a received signal from the radar device 102.

The estimation unit 1052 inputs a feature of the received signal acquired by the signal acquisition unit 1051 to the learning model 1041 to acquire target object information from the learning model 1041.

The signal output unit 1053 outputs the target object information acquired by the estimation unit 1052 to the observation device 200 as the observation signal O through the communication antenna 101. The signal output unit 1053 may also output the received signal corresponding to the target object information as the observation signal O together with the target object information.

The observation device 200 is a device that transmits, to the flying object 100, a control signal to control the observation of the detection area D by the flying object 100, and acquires the observation signal O from the flying object 100. The observation device 200 has a communication unit 201 including an antenna and a control unit that controls communication through the antenna. Information is sent and received with the flying object 100 through the communication unit 201.

A signal processing unit 202 processes the observation signal O from the flying object 100. The signal processing unit 202 performs a visualization process of, for example, the observation result in the detection area D by an image based on the observation signal O acquired from the flying object 100.

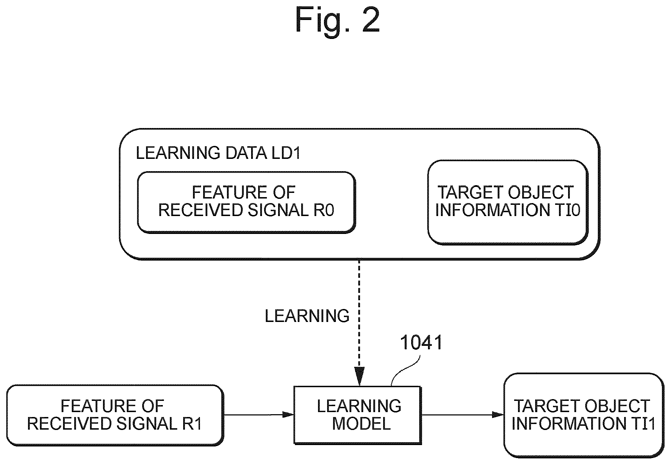

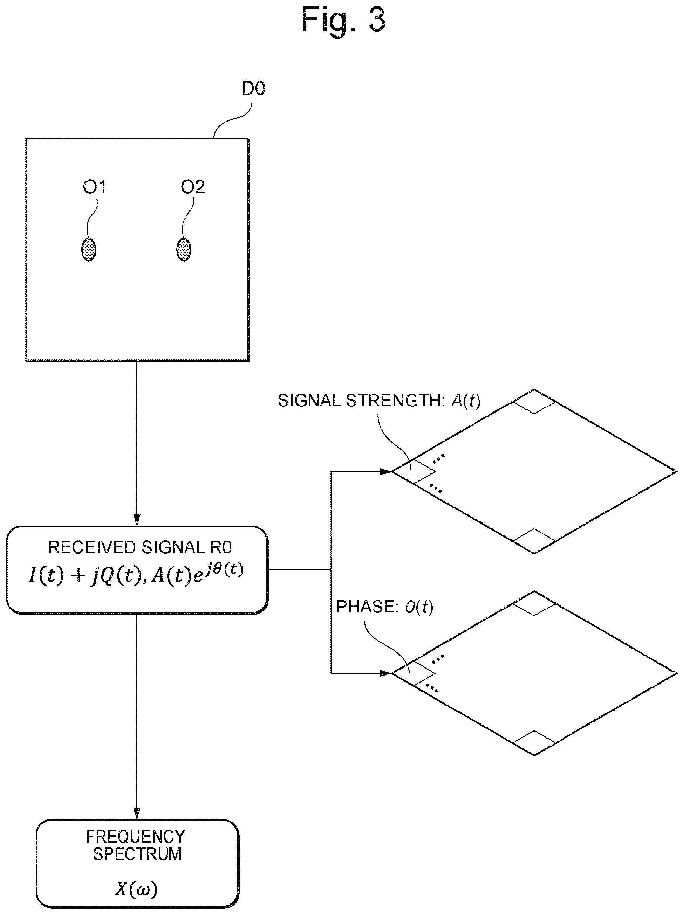

Referring to Figure 2 and Figure 3, the training of the learning model 1041 according to the present embodiment will be described.

Figure 2 is a diagram for schematically describing the training and inference of the learning model 1041. The learning model 1041 is trained using learning data LD1 as training data. The learning data LD includes a pair of a feature of a received signal R0 (a received signal of a first synthetic aperture radar), acquired by radiating electromagnetic waves to a certain area (learning area) ,and target object information TI0 (first target object information) corresponding to the feature of the received signal R0. The learning model 1041 is trained with the feature of the received signal R0 as input and the target object information TI0 as output. Here, the feature in the present embodiment is information including the frequency spectrum, signal strength, or the phase of the received signal R0.

In Figure 3, the received signal R0 and the feature of the received signal when a learning area D0 in which two target objects of a target object O1 and a target object O2 exist is observed is illustrated.

When the learning area D0 is observed, the received signal R0 is obtained. The feature (the frequency spectrum, signal strength, or phase) of the received signal R0 is calculated based on the received signal R0. In order to associate the target object information TI0 with the feature of the received signal R0, information processing of the target object information TI0 corresponding to the received signal R0 is performed to make a user understandable.

For example, the feature of the received signal R0 may be generated as a graph based on the received signal R0 so that the user associates the feature of the received signal R0 with the target object information TI0 based on the graph. Further, using a learning model for associating the received signal R0 with the target object information TI0, the target object information may be associated with the feature of the received signal R0 by a computer. Further, the received signal R0 may be information understandable to the user via a predetermined conversion process for SAR imaging. Alternatively, the target object information TI0 associated with the feature may be information acquired from another device that observes the learning area D0 without imaging described above. For example, when detecting a ship, the target object information TI0 may be information acquired by using an automatic identification system (AIS) in addition to the information obtained from processing on the received signal R0.

The target object information TI0 is information associated with the feature (the frequency spectrum, signal strength, or phase) of the received signal R0. The received signal R0 is, for example, a signal obtained in a complex number form, for example, as I(t) + jQ(t) (where j is imaginary unit and t is time). When the received signal R0 is expressed in a polar form, the received signal R0 can be expressed as A(t)e^{jθ(t)}. At this time, the signal strength of the received signal R0 is A(t) and the phase of the received signal R0 is θ(t), resulting in obtaining the signal strength and the phase for respective coordinates in the detection area D0. Further, a frequency spectrum X(ω) of the received signal R0 can be obtained by performing frequency conversion on the received signal R0 in the time domain.

The learning model 1041 is trained to output target object information in response to the input of these features calculated from the received signal R0. For example, the learning model 1041 is trained by calculating the features based on the received signal R0 in the control unit 105 to output target object information in response to input of the features. Note that the learning model 1041 may also be trained to output target object information in response to input of the received signal R0 itself. In this case, the features based on the received signal R0 may be calculated in the learning model 1041.

The target object information T10 includes probability distribution information indicative of a probability that a target object exists in each pixel of the learning area. Further, for example, the target object information TI0 includes information on the number of target objects existing in the learning area and the attributes of the target objects. The attributes of the target objects are various kinds of information, for example, about the kinds of the target objects (building, mobile object, terrain, natural object, and the like), the sizes of the target objects, the moving speeds of the target objects, and the like. The information on the attributes of the target objects may also be a probability that each of the target objects is classified into an item of a certain attribute.

The learning model 1041 is trained using learning data LD1 prepared as described above by a general machine learning method such as a method using a neural network. Note that the learning model 1041 may be configured as a single learning model, or may be configured as a learning model obtained by combining two or more learning models.

When the feature of a received signal R1 (a received signal of a second synthetic aperture radar) acquired by the flying object 100 based on electromagnetic waves radiated by the flying object 100 to a detection area is input to the trained learning model 1041, the learning model 1041 outputs target object information TI1 (second target object information).

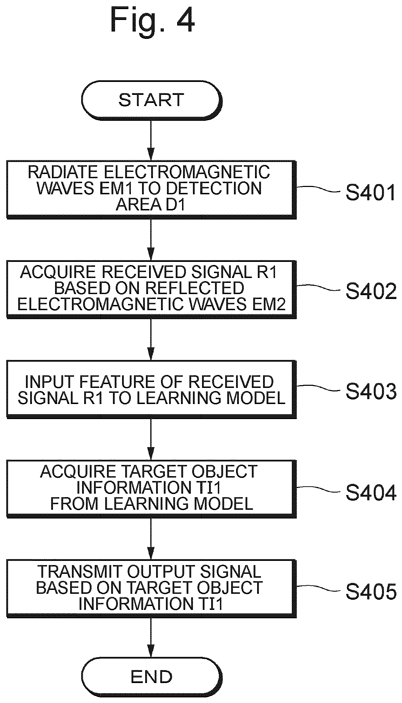

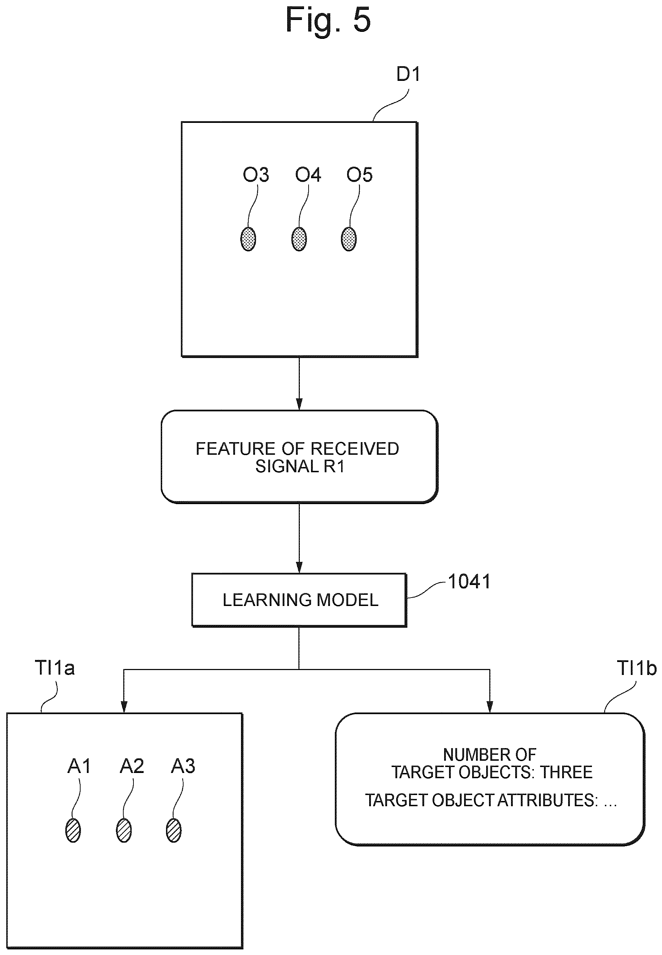

Referring to Figure 4 and Figure 5, processing by the flying object 100 will be described. In the processing of Figure 4 and Figure 5, it is assumed that target object information output by the learning model 1041 is information according to the frequency spectrum of the received signal R1.

In step S401 of Figure 4, the radar device 102 radiates the electromagnetic waves EM1 to the detection area D1. The radiation timing may be timing controlled by the observation device 200, or timing specified in advance in the flying object 100. As illustrated in Figure 5, target objects O3, O4, and O5 exist in the detection area D1.

In step S402, the signal acquisition unit 1051 acquires, from the radar device 102, the received signal R1 based on the reflected electromagnetic waves EM2 detected by the radar device 102.

In step S403, the estimation unit 1052 inputs the feature of the received signal R1 to the learning model 1041. At this time, the estimation unit 1052 performs arithmetic operations to calculate the feature (for example, the frequency spectrum) of the received signal R1.

In step S404, the estimation unit 1052 acquires, from the learning model 1041, target object information MD1 according to the feature of the received signal R1. As an example, the target object information includes target object information TI1a and target object information TI1b illustrated in Figure 5. The target object information TI1a is a probability distribution indicative of probabilities that target objects exist in the detection area. In the target object information TI1a, areas A1, A2, and A3 are illustrated as areas with high probabilities that the target objects exist. The target object information TI1b indicates the number of target objects in the detection area and the attributes of the target objects. In this example, three target objects are detected.

In step S405, the signal output unit 1053 outputs, to the observation device 200, an output signal based on the target object information TI1. The output signal based on the target object information TI1 is a signal for transmitting all the target object information TI1 or part of the target object information TI1. Alternatively, the output signal may be a signal for transmitting information as a result of performing information processing on the target object information.

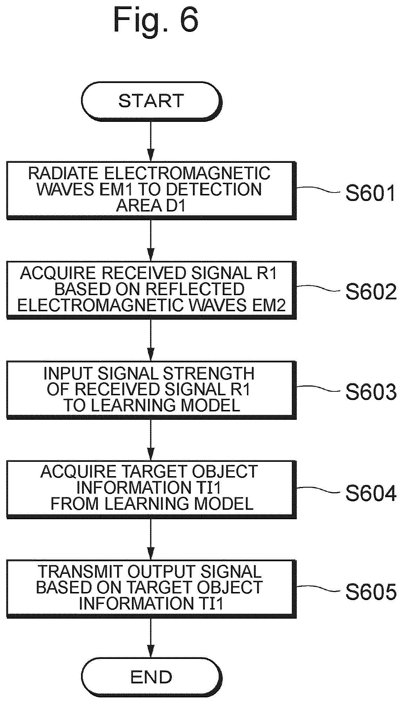

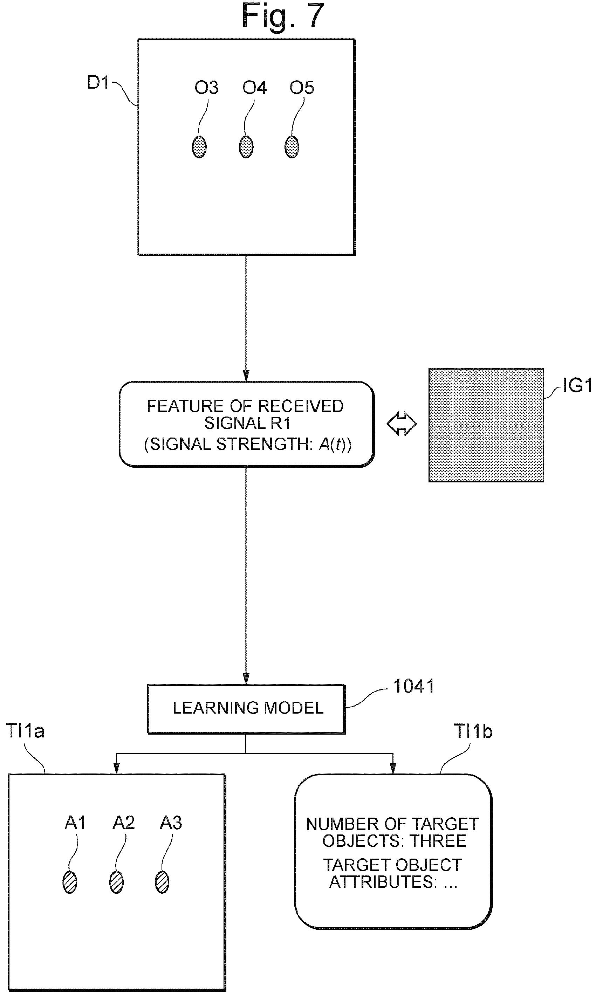

Referring to Figure 6 and Figure 7, a case where the target object information output by the learning model 1041 is information based on the signal strength of the received signal R1 will be described. As illustrated in Figure 7, it is assumed that target objects O3, O4, and O5 exist in the detection area D1 like in the case of Figure 5.

In step S601 of Figure 6, the radar device 102 radiates the electromagnetic waves EM1 to the detection area D1. In step S602, the signal acquisition unit 1051 acquires, from the radar device 102, the received signal R1 based on the reflected electromagnetic waves EM2 detected by the radar device 102.

In step S603, the estimation unit 1052 inputs, to the learning model 1041, the signal strength of the received signal R1 as a feature of the received signal R1. For example, the received signal R1 is a signal capable of generating an image IG1 illustrated in Figure 7. The image IG1 can take various forms depending on the signal. As an example, the signal strength obtained by detecting each target object may be plotted to illustrate changes in signal strength like a pattern in the image IG1. In step S604, the estimation unit 1052 acquires, from the learning model 1041, the target object information MD1 according to the signal strength of the received signal R1. As an example, the target object information includes target object information TI1a and target object information TI1b as illustrated in Figure 7 like in the case of Figure 5.

In step S605, the signal output unit 1053 outputs, to the observation device 200, an output signal based on the target object information TI1.

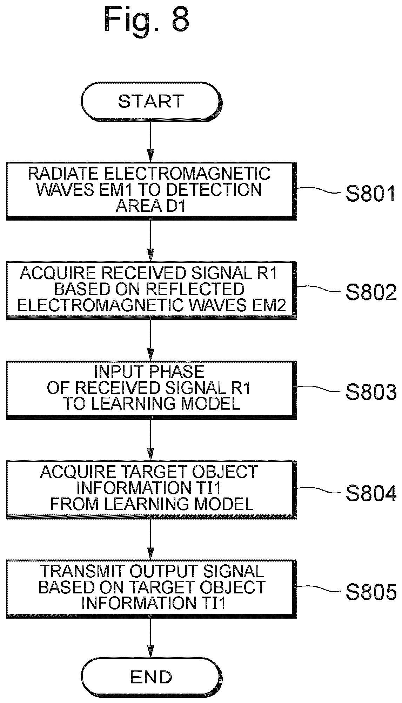

Referring to Figure 8, a case where the target object information output by the learning model 1041 is information based on the phase of the received signal R1 will be described. In step S801 of Figure 8, the radar device 102 radiates the electromagnetic waves EM1 to the detection area D1. In step S602, the signal acquisition unit 1051 acquires, from the radar device 102, the received signal R1 based on the reflected electromagnetic waves EM2 detected by the radar device 102. In step S803, the estimation unit 1052 inputs the phase of the received signal R1 to the learning model 1041. In step S804, the estimation unit 1052 acquires, from the learning model 1041, the target object information MD1 according to the signal strength of the received signal R1. In step S605, the signal output unit 1053 outputs, to the observation device 200, an output signal based on the target object information TI1.

As described above, when inferring the target object information using the learning model 1041, the learning model 1041 is trained to output target object information using, as input, the frequency spectrum, strength, or phase as a feature of the received signal in order to make an inference using the learning model 1041. At this time, the frequency spectrums, strengths, or phases can be combined as features of a received signal.

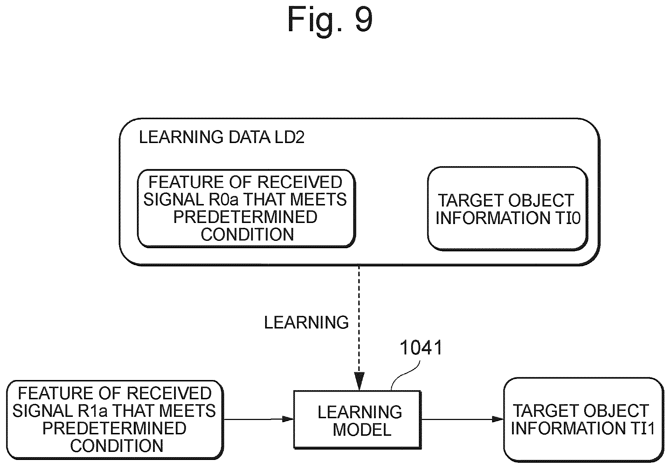

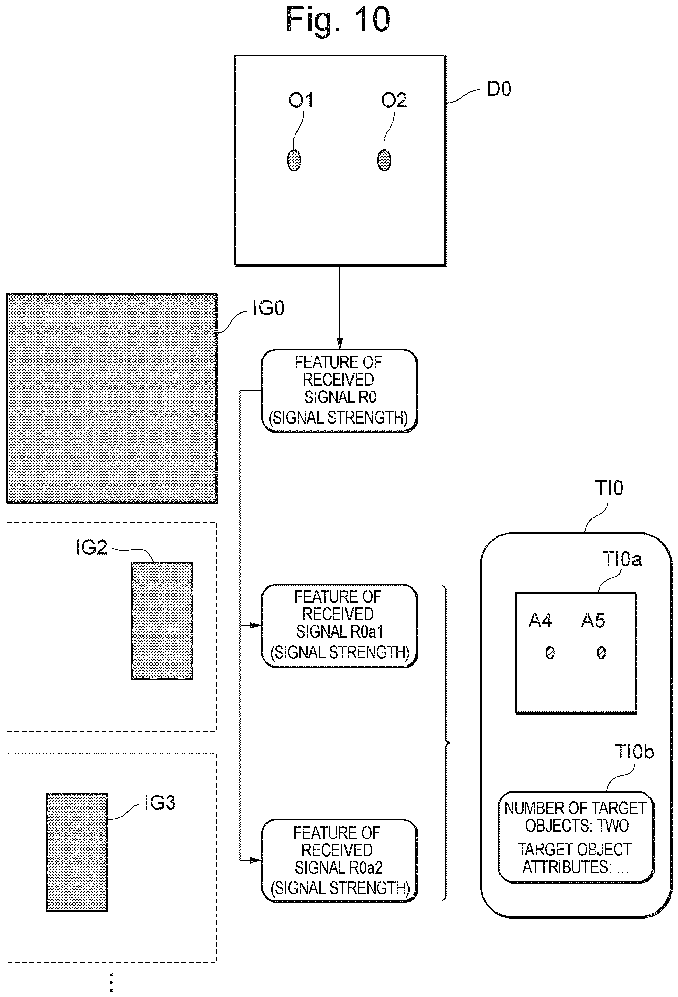

Referring to Figure 9 and Figure 10, another learning method of the learning model 1041 according to the present embodiment will be described.

Figure 9 is a diagram for schematically describing the learning and inference of the learning model 1041. The learning model 1041 is trained using learning data LD2 as training data. In the learning data LD2, a pair of a received signal R0a, the feature of which meets a predetermined condition in the received signal R0 (the received signal of the first synthetic aperture radar) acquired by radiating electromagnetic waves to a certain area (learning area), and target object information TI0 (first target object information) according to the feature of the received signal R0a are included.

The predetermined condition for the feature is a condition capable of extracting a received signal including a feature based on each target object in the learning area, which can be changed depending on the purpose of the observation or the like. For example, when the received signal R0a is extracted from the received signal R0, a received signal the signal strength of which meets the predetermined condition can be extracted. For example, the predetermined condition for the signal strength is that the signal strength is larger than a predetermined threshold. Further, for example, the predetermined condition for the frequency spectrum is that the frequency is in a predetermined frequency band. Further, for example, the predetermined condition for the phase is that the phase is within a predetermined range.

The learning model 1041 is trained using, as input, the feature of the received signal R0a, and the target object information TI0 as output.

Referring to Figure 10, the generation of learning data LD2 will be described. In the example of Figure 10, the generation of the learning data LD2 using observation results of the learning area D0 in which two target objects of a target object O1 and a target object O2 exist is illustrated.

When the learning area D0 is observed, the received signal R0 is obtained. When the received signal R0 is imaged by being plotted as a graph or by being converted into a SAR image, an image IG0 is obtained. The image IG0 can be associated with the signal strength of the received signal R0. In the received signal R0, a received signal the signal strength of which is larger than a predetermined threshold is extracted from the received signal R0. For example, a received signal R0a including a received signal R0a1 corresponding to a partial area in the image IG0 and a received signal R0a2 corresponding to any other partial area in the image IG0 is extracted. When the received signal R0a1 is imaged, an image IG2 is obtained, and when the received signal R0a2 is imaged, an image IG3 is obtained. The images IG2 and IG3 can be associated with the signal strengths of the received signals R0a1 and R0a2, respectively.

The target object information TI0 based on the image IG0 is associated with the feature of each received signal of the received signal R0a including the received signal R0a1 and the received signal R0a2, respectively. As an example, the target object information includes target object information TI0a and target object information TI0b. The target object information TI0a is a probability distribution indicative of probabilities that the target objects exist in the detection area. In the target object information TI0a, areas A4 and A5 are illustrated as areas with high probabilities that the target objects exist. The target object information TI0b indicates the number of target objects in the detection area and the attributes of the target objects. In this example, two target objects are detected. The learning data LD2 is generated as a pair of the received signal R0a and the target object information TI0.

The learning model 1041 is trained using the learning data LD2 prepared as described above by a general machine learning method such as the method using the neural network.

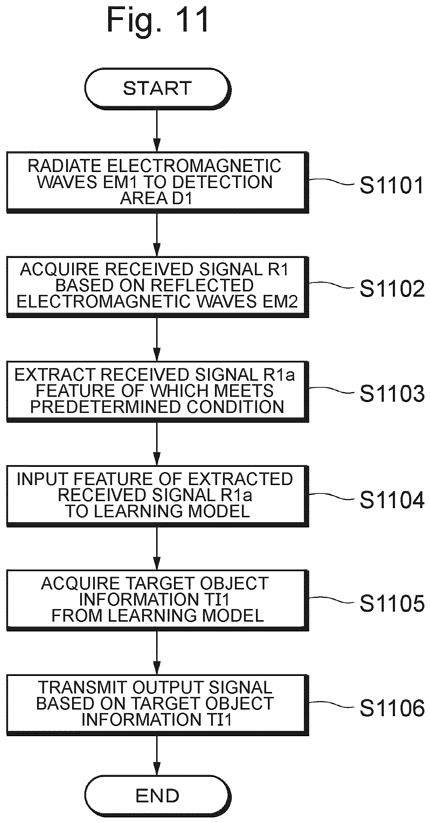

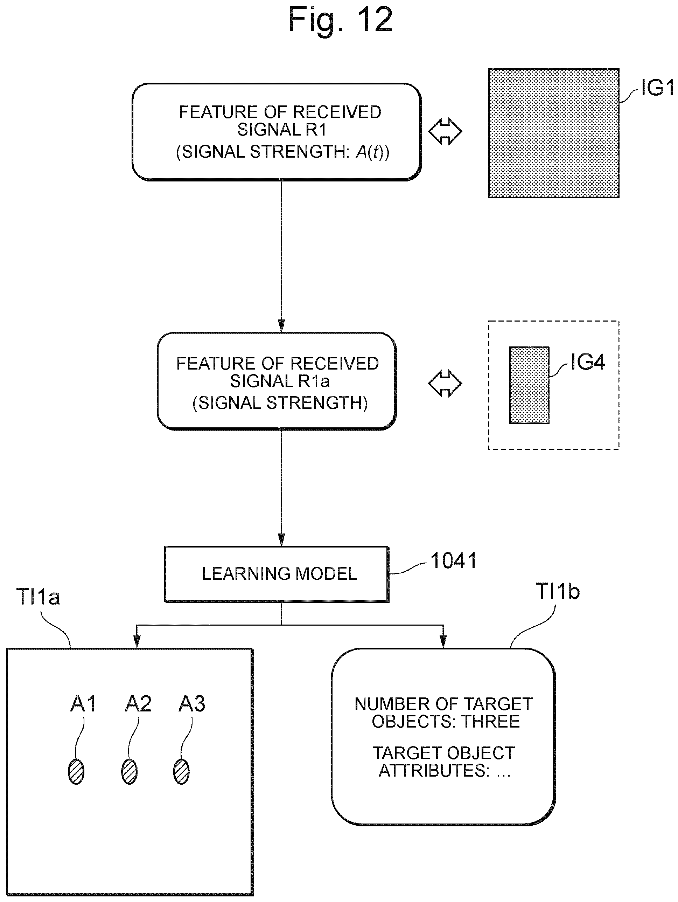

Referring to Figure 11 and Figure 12, processing by the flying object 100 will be described.

In step S1101 of Figure 11, the radar device 102 radiates the electromagnetic waves EM1 to the detection area D1. As illustrated in Figure 12, target objects O3, O4, and O5 exist in the detection area D1.

In step S1102, the signal acquisition unit 1051 acquires, from the radar device 102, the received signal R1 based on the reflected electromagnetic waves EM2 detected by the radar device 102.

In step S1103, the estimation unit 1052 extracts, out of the received signal R1, a received signal R1a that meets a predetermined condition for the signal strength. For example, as illustrated in Figure 12, the feature of the extracted received signal R1a corresponds to an image IG4 obtained by taking out a part of the image IG1 based on the received signal R1.

In step S1104, the estimation unit 1052 inputs the received signal R1a to the learning model 1041.

In step S1105, the estimation unit 1052 acquires, from the learning model 1041, the target object information MD1 based on the feature of the received signal R1a. As an example, the target object information includes target object information TI1a and target object information TI1b as illustrated in Figure 12. In the target object information TI1a, areas A1, A2, and A3 are illustrated as areas with high probabilities that the target objects exist like in the case of Figure 5. The target object information TI1b indicates the number of target objects in the detection area and the attributes of the target objects. In this example, three target objects are detected.

In step S1106, the signal output unit 1053 outputs, to the observation device 200, an output signal based on the target object information TI1.

Thus, the amount of data as input used by the learning model 1041 for inference can be reduced by making it possible to output target object information based on the feature of the overall received signal from the feature of the partial received signal. Further, since the arithmetic operation time using the learning model 1041 can be shortened, real-time observation is improved. Further, since the arithmetic operation load by the learning model 1041 can be reduced, target object information can be acquired using a processing device lighter in weight.

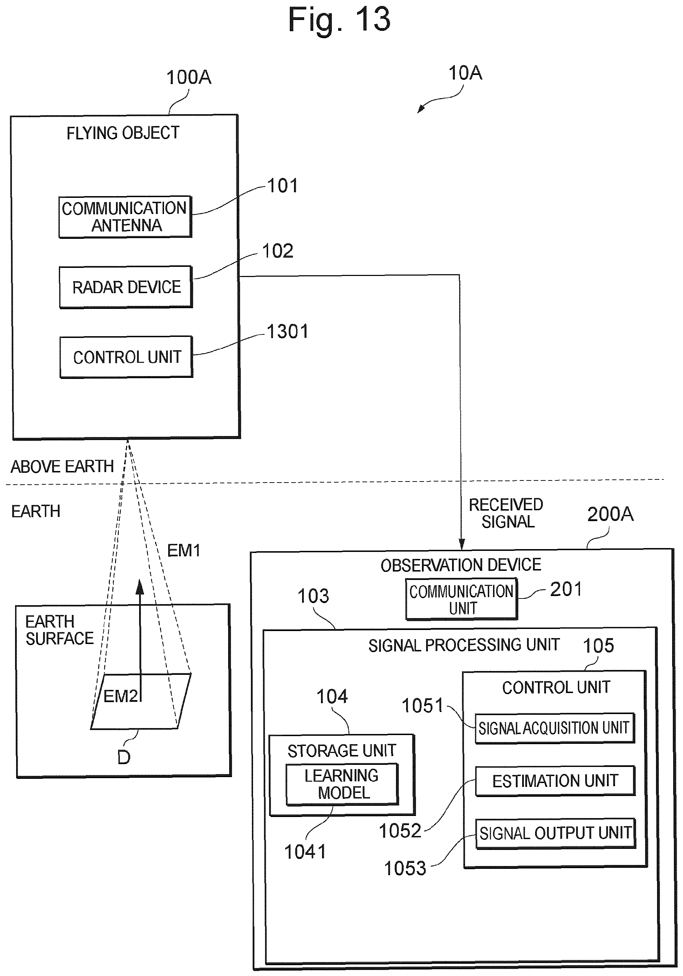

In Figure 13, a block diagram illustrating an observation system 10A as another aspect is illustrated. As illustrated in Figure 13, the signal processing device 103 can also be provided to be included in an observation device 200A. A received signal acquired by the radar device 102 is transmitted to the observation device 200A by a control unit 1301 of a flying object 100A. The processing described above can also be performed by the signal processing device 103 of the observation device 200A.

The embodiment described above is to facilitate understanding of the present invention, and it is not intended to interpret the present invention in a limited manner. Each element included in the embodiment and the condition therefor are not limited to those exemplified and can be changed appropriately. Further, different components can be partially replaced with one another or combined.

### Reference Signs List

10...observation system, 100...flying object, 101...communication antenna, 102...radar device, 103...signal processing device, 104...storage unit, 1041...learning model, 105...control unit, 1051... signal acquisition unit, 1052...estimation unit, 1053...signal output unit, 200...observation device, 201...communication unit, 202...signal processing unit.

## Claims

1. A learning model causing a computer to perform:
a function to make the learning model trained using training data with, as input, a feature of a received signal of a first synthetic aperture radar based on reflected electromagnetic waves obtained by reflecting electromagnetic waves radiated to a learning area, and first target object information on a target object in the learning area as output; and
a function to output second target object information on a target object in a detection area in response to input of a feature of a received signal of a second synthetic aperture radar based on reflected electromagnetic waves obtained by reflecting electromagnetic waves radiated to the detection area.

2. The learning model according to claim 1, wherein
the feature of the received signal of the first synthetic aperture radar includes a frequency spectrum of the received signal of the first synthetic aperture radar, and
the feature of the received signal of the second synthetic aperture radar includes a frequency spectrum of the received signal of the second synthetic aperture radar.

3. The learning model according to claim 1, wherein
the feature of the received signal of the first synthetic aperture radar includes a signal strength of the received signal of the first synthetic aperture radar, and
the feature of the received signal of the second synthetic aperture radar includes a signal strength of the received signal of the second synthetic aperture radar.

4. The learning model according to claim 1, wherein
the feature of the received signal of the first synthetic aperture radar includes a phase of the received signal of the first synthetic aperture radar, and
the feature of the received signal of the second synthetic aperture radar includes a phase of the received signal of the second synthetic aperture radar.

5. The learning model according to claim 1, wherein
the received signal of the first synthetic aperture radar is a signal corresponding to a partial area in which the feature meets a predetermined condition in the learning area, and
the feature of the received signal of the first synthetic aperture radar includes a feature based on the target object in the learning area.

6. The learning model according to claim 5, wherein
the received signal of the second synthetic aperture radar is a signal corresponding to a partial area in which the feature meets the predetermined condition in the detection area, and
the feature of the received signal of the second synthetic aperture radar includes a feature based on the target object in the detection area.

7. The learning model according to claim 1, wherein
the first target object information includes information indicative of an attribute of the target object in the learning area, and
the second target object information includes information indicative of an attribute of the target object in the detection area.

8. A signal processing device comprising:
a storage unit in which the learning model according to any one of claims 1 to 7 is stored;
a signal acquisition unit that acquires the received signal of the second synthetic aperture radar; and
an estimation unit that inputs, to the learning model, the received signal of the second synthetic aperture radar to infer the second target object information.

9. A flying object comprising:
a storage unit in which the learning model according to any one of claims 1 to 7 is stored;
a signal acquisition unit that acquires the received signal of the second synthetic aperture radar;
an estimation unit that inputs, to the learning mode, the received signal of the second synthetic aperture radar to infer the second target object information; and
a signal output unit that outputs, to outside, an output signal based on the second target object information.

10. A training data generation method causing a computer to perform the following steps of:
acquiring a received signal of a first synthetic aperture radar based on reflected electromagnetic waves obtained by reflecting electromagnetic waves radiated to a learning area;
extracting, from the received signal of the first synthetic aperture radar in the learning area, a training signal corresponding to an area in which a target object in the learning area exists;
acquiring target object information on the target object; and
storing, as training data used for training of a learning model to make the computer work, a pair of a feature of the training signal and the target object information to output second target object information on a target object in a detection area according to a feature of a received signal of a second synthetic aperture radar in response to input of the feature of the received signal of the second synthetic aperture radar based on reflected electromagnetic waves obtained by reflecting electromagnetic waves radiated to the detection area.
